(19) Europäisches Patentamt
European Patent Office
Office européen des brevets

(11) Veröffentlichungsnummer: **0 115 772**
**B1**

(12) # EUROPÄISCHE PATENTSCHRIFT

(45) Veröffentlichungstag der Patentschrift: **15.02.89**

(21) Anmeldenummer: **84100093.8**

(22) Anmeldetag: **07.01.84**

(51) Int. Cl.⁴: **C 07 F 7/08**, C 07 F 7/12, C 10 L 1/28

(54) **Verfahren zur Spaltung von Organosiloxanen und deren Produkte und Anwendungen.**

(30) Priorität: **04.02.83 DE 3303707**

(43) Veröffentlichungstag der Anmeldung: **15.08.84 Patentblatt 84/33**

(45) Bekanntmachung des Hinweises auf die Patenterteilung: **15.02.89 Patentblatt 89/7**

(84) Benannte Vertragsstaaten: **BE DE FR GB NL**

(56) Entgegenhaltungen:
**DE-B-1 167 341**
**FR-A-2 193 049**
**GB-A-914 460**
**US-A-2 421 653**
**US-A-2 529 496**
**US-A-3 308 145**

**J. Amer. Chem. Soc., Vol. 74, Seiten 1853-1854**
**Doklady Akademii Nauk SSSR, Vol. 227, No. 2, 1976, Seiten 198-201**

(73) Patentinhaber: **HÜLS TROISDORF AKTIENGESELLSCHAFT, Postfach 11 65, D-5210 Troisdorf (DE)**

(72) Erfinder: **Kötzsch, Hans- Joachim, Dr., Fecampring 28, D-7888 Rheinfelden (DE)**
Erfinder: **Vahlensieck, Hans- Joachim, Dr., Im Habiken 2, D-7867 Wehr (DE)**

**EP 0 115 772 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Gegenstand der vorliegenden Erfindung ist ein katalytisches Verfahren zur Spaltung von flüssigen Organodisiloxanen der allgemeinen Formel $(R_3Si)_2O$, in der R für gleiche oder ungleiche, ggf. durch Ester-, Halogen- oder Arylreste substituierte gesättigte oder ungesättigte Alkylreste mit 1 bis 18 C-Atomen oder für ggf. Halogen oder Alkyl-substituierte Arylreste steht, mit Chlorsilanen der allgemeinen Formel $R'_{4-n}SiCl_n$ (n = 2, 3 oder 4), in der R' für H und/oder R, wobei diese Reste auch durch die Gruppe 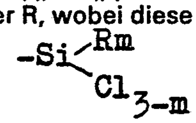 (m = 0 oder 1 oder 2) substituiert sein können oder für den Rest der Formel $-O-[Si(R_n)O]_p-$

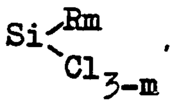, in

der R die obengenannte Bedeutung hat und p = 0 bis 4 sein kann, steht, unter gleichzeitiger Herstellung von Organochlorsilanen der allgemeinen Formel $R_3SiCl$ und von Organosiloxanen der allgemeinen Formel $R''_{4-n}Si(OSiR_3)_n$, in der R'' = R' ist und/oder die Gruppierung $-O[Si(R_2)O]p-$ 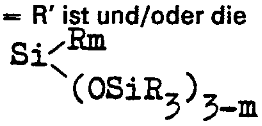 bedeutet.

Die bisherigen Untersuchungsergebnisse an diesem Reaktionsprinzip wurden bisher beschrieben von J. R. Elliot u. a. in J. Amer. Chem. Soc. 74, 1853 ff (1952), M. G. Woronkov u. a. in J. Obsh. Chim 29, (1959), 1508 bis 1514, und in Dokl. Akad. Nauk SSSR 227, (1976) (2), eng., 198-201, und in den US-Patenten 3 065 252 (1962) und 3 101 361 (1963).

Der Durchschnittsfachmann entnimmt diesen Arbeiten, daß sowohl die wenigen untersuchten Chlorsilane als auch die Siloxane recht unterschiedliche Reaktivitäten besitzen, daß aber ganz allgemein die Neigung zu sehr langsamen Reaktionsabläufen besteht und daß die Umsetzung regelmäßig unvollständig bleibt, wobei aber nicht nur monomere, sondern zum Teil auch polymere Si-Cl-haltige Siloxane entstehen. Die bisher erhaltenen Ausbeuten an Si-Cl-freien persilylierten Produkten sind zu gering für wirtschaftlich lohnende Nutzungen, obwohl eine ganze Reihe solcher Produkte für sinnreiche Anwendungen infrage kommen. Es bestand deshalb die Aufgabe, für dieses an sich bekannte Verfahren eine Durchführungsform zu finden, die es ermöglicht, den Reaktionsablauf zu beschleunigen, mögliche Nebenreaktionen abzublocken und die Ausbeuten beträchtlich zu erhöhen.

In Erfüllung dieser Aufgabe wurde nun bei dem im Oberbegriff des Patentanspruchs 1 genannten Verfahren gefunden, daß man die Reaktion in Gegenwart von $FeCl_3$ und katalytischen Mengen von Chlorwasserstoff durchführt.

Dieses Verfahren bringt entscheidende Fortschritte hinsichtlich der Ausbeute, der Produktqualität und der generellen Anwendbarkeit, die nach dem bisherigen Stand der Erkenntnisse nicht zu erwarten waren.

Das erfindungsgemäße Verfahren wird in einfacher Weise so durchgeführt, daß man nach dem Vermischen der Siloxan-Komponente $(R_3Si)_2O$ mit der Chlorsilan-Komponente $R'_{4-n}SiCl_n$ und dem $FeCl_3$-Katalysator durch Zuführung einer katalytischen Menge (0,05-1 Gew.-%) an gasförmigem Chlorwasserstoff die Reaktion in Gang setzt, und diese unter Rühren und Temperaturkontrolle, gegebenenfalls durch Kühlen oder Heizen, steuert bis das Gemisch ausreagiert hat. Es kann dabei von Vorteil sein, die katalytische HCl-Menge von Zeit zu Zeit zu ergänzen.

Gegebenenfalls werden dem Gemisch gegen Ende der Reaktion katalytische Mengen von 0,02 - 0,5 Gew.-% Phosphortrichlorid und ca. 0,05 - 1 Gew.-% Chlorwasserstoff hinzugefügt. Zur Abtrennung des Chlorsilans, und ggf. der Siloxane, werden übliche destillative Methoden angewandt.

Der $FeCl_3$-Katalysator wird in Substanz oder als Lösung oder Suspension von 1 - 15 % (Gewichtsprozent) wasserfreiem Eisen(III)chlorid vorzugsweise in Ketonen verwendet. Er wird in Konzentrationen zwischen 0,01 % und 10 %, bezogen auf den Gesamtansatz, angewandt.

Die Reaktionstemperatur ist dabei nicht kritisch. Sie kann bei Umgebungstemperatur bis zur Siedetemperatur des Reaktionssystems gewählt werden. Bevorzugt wird ein Temperaturbereich zwischen 20° C und 55° C, wobei es von Vorteil ist, unterhalb des Siedepunktes des Reaktionssystems zu bleiben, um HCl-Verluste zu vermeiden.

Das als Ausgangskomponente dienende Siloxan soll zu dem eingesetzten Organosilan in einem solchen Verältnis stehen, daß die Siloxanmenge mindestens äquivalent einem der an das Si-Atom gebundenen Chloratome ist.

Als Apparatur für die Durchführung des erfindungsgemäßen Verfahrens dient ein heiz- und kühlbarer Rührreaktor üblicher Bauart.

Als Apparatur für die Durchführung des erfindungsgemäßen Verfahrens dient ein heiz- und kühlbarer Rührreaktor üblicher Bauart.

Als Ausgangsstoffe der allgemeinen Formel $(R_3Si)_2O$ werden Disiloxane verwendet, insbesondere das als Abfall bei der Antibiotica-Synthese anfallende Hexamethyldisiloxan; darüber hinaus auch beispielsweise 1.2-Divinyltetramethyldisiloxan, Hexaäthyldisiloxan, 1.2-Di-3'-acetoxyropyltetramethyldisiloxan, 1.2-Dimethyltetraphenyldisiloxan, 1.2-Ditertiärbutyltetramethyldisiloxan, 1.2-Bisdodecyltetramethyldosiloxan, 1.2-Di-2'-Phenyläthyltetramethyldisiloxan u.a.m. Ein besonderer Vorteil des erfindungsgemäßen Verfahrens ist, daß es z. B. auch mit verunreinigten Siloxanen arbeiten kann, z. B. mit Lösungsmittel wie Toluol oder Chloroform enthaltendem Siloxan. Aminhaltige Siloxane sind vor der Verwendung zu neutralisieren.

Als Ausgangsstoffe der allgemeinen Formel $R'_{4-n}SiCl_n$ werden Organochlorsilane verschiedenster Art verwendet: z. B. Tetrachlorsilan, Trichlorsilan, Dichlorsilan, Hexachlordisiloxan, Decachlortetrasiloxan, Methyltrichlorsilan, Methylhydrogendichlorsilan, Dimethyldichlorsilan, Äthyltrichlorsilan, Propyltrichlorsilan, Isobutyltrichlorsilan, Octyltrichlorsilan, Octadecyltrichlorsilan, Vinyltrichlorsilan, Vinylmethyldichlorsilan, 1.2-Bis-trichlorsilyläthan, 1.2-Bis-trichlorsilyläthylen, Allyltrichlorsilan, Propenyltrichlorsilan, Chlormethylmethyldichlorsilan, 2-Chloräthylmethyldichlorsilan, 3-Chlorpropyltrichlorsilan, 1-Trichlorsilyl-butadien-(1.3), Propinyltrichlorsilan, Phenyltrichlorsilan, Phenylmethyldichlorsilan, Diphenyldichlorsilan, Tolyltrichlorsilan, Cyclohexenyltrichlorsilan, Cyclohexadienyltrichlorsilan, Bistrichlorsilylbenzole, Bis-trichlorsilylcyclohexene etc. Auch Gemische dieser Verbindungen sind einsetzbar.

Der Rest R' kann demzufolge für beliebige gleiche oder ungleiche Reste aus der Gruppe Wasserstoff, Alkyl, Aryl, Alkenyl stehen, wobei diese Reste, vorzugsweise endständig, durch ein Halogen oder eine $-Si{<}^{Rm}_{Cl_{3-m}}$ -Gruppe substituiert sein können. Der Rest R' kann auch für die Gruppierung

$-O[Si(R_2)O]_p-Si{<}^{Rm}_{Cl_{3-m}}$ stehen, wobei m 0 bis 3 und

p = 0 bis 4 sein kann.

Beim Katalysatorsystem ist die erfindungsgemäße Anwendung katalytischer Mengen Chlorwasserstoff zusammen mit $FeCl_3$ (fest oder gelöst) z. B. in den obengenannten Konzentrationen wirksam im Sinne des erfindungsgemäßen Verfahrens.

Darüber hinaus hat es sich als Vorteil erwiesen, das $FeCl_3$ in Form seiner Anlagerungs-Komplexe mit Oxo-Gruppen enthaltenden Verbindungen, wie Ketonen, Aldehyden oder Carbonsäurechloriden erfindungsgemäß als Katalysator, zusammen mit einer katalytischen Menge Chlorwasserstoff, einzusetzen. Bevorzugt sind hierbei Ketone. Oxo-Verbindungen, erfindungsgemäß vorzugsweise Ketone, bilden mit $FeCl_3$ Solvate, beispielsweise $C_6H_5COCH_3 \cdot FeCl_3$ aus Acetophenon (vgl. Beilstein 7. IV 619), die in der Lösung von $FeCl_3$ in den Ketonen stets vorliegen, wie anhand der IR-Spektren nachzuweisen ist, und die erfindungsgemäß durch einfaches Auflösen von $FeCl_3$ im entsprechenden Keton in der Kälte hergestellt werden.

Ketone, die sich für diese erfindungsgemäßen katalytischen Zwecke eignen sind beispielsweise Aceton, Butanon-(2), 4-Methylpentanon-(2), Mesityloxid, Acetophenon, Dibenzalaceton, Benzophenol, Cyclohexanon u.a.m. Der besondere Vorteil der erfindungsgemäßen Anwendung solcher Keton-Solvate liegt in der erheblichen Reaktionsbeschleunigung, die damit erzielt wird.

Der Cokatalysator Phosphortrichlorid wird in den obengenannten Konzentrationen gegebenenfalls in Kombination mit katalytischen Mengen Chlorwasserstoff, zusätzlich und erfindungsgemäß gegen Ende der Umsetzung nach dem erfindungsgemäßen Verfahren insbesondere in solchen Reaktionsansätzen angewandt, in denen sich die Reaktionsgeschwindigkeit mit zunehmendem Reaktionsablauf verlangsamt. Der erfindungsgemäße $PCl_3$-Zusatz bewirkt dann den rascheren Ablauf der noch zu erwartenden restlichen Umsetzungsreaktion. Überraschenderweise tritt dieser zusätzliche erfindungsgemäße katalytische Effekt nicht ein, wenn das $PCl_3$ der Reaktionsmischung vom Beginn an, gegebenenfalls zusammen mit dem erfindungsgemäßen $FeCl_3$/HCl/-Keton-Katalysator beigegeben wird.

Nach dem erfindungsgemäßen Verfahren hergestellte Stoffe sind beispielsweise die alle aus Hexamethyldisiloxan gleichzeitig mit Trimethylchlorsilan als zweitem Produkt zugänglichen Siloxan-Verbindungen der allgemeinen Formel $R''_{4-n}Si(OSiR_3)_n$ wie nachstehend aufgezählt:

2.2.6.6-Tetramethyl-4.4-bistrimethylsiloxy-2.4.6-Trisila-3.5-dioxaheptan,

2.2.6.6-Tetramethyl-4-trimethylsiloxy-2.4.-trisila-3.5-dioxaheptan,

2.2.6.6-Tetramethyl-2.4.6-trisila-3.5-dioxaheptan,

2.2.8.8-Tetramethyl-4.4.6.6-tetrakis-trimethylsiloxy-2.4.6.8-terasila-3.5.7-trioxanonan,

2.2.4.6.6-Pentylmethyl-4.4-bistrimethylsiloxy-2.4.6-trisila-3.5-dioxaheptan,

2.2.4.6.6-Pentamethyl-4-trimethylsiloxy-2.4.6-trisila-3.5-dioxaheptan,

2.2.4.4.6.6-Hexamethyl-2.4.6-trisila-3.5-dioxaheptan,

2.2.6-Trimethyl-4.4-bis-trimethylsiloxy-2.4-disila-3-oxaheptan,

2.2-Dimethyl-4.4-bis-trimethylsiloxy-2.4-disila-3-oxadocosan,

2.2.6.6-Tetramethyl-4-vinyl-4-trimethylsiloxy-2.4.6-trisila-3.5-dioxaheptan,

2.2.4.6.6-Pentamethyl-4-vinyl-2.4.6-trisila-3.5-dioxaheptan,

2.2.9.9-Tetramethyl-4.4.7.7-tetrakis-trimethylsiloxy-2.4.7.9-tetrasila-3.8-dioxadecan,

2.2.4.6.6-Pentamethyl-4-chlormethyl-2.4.6-trisila-3.5-dioxaheptan,

2.2-Dimethyl-4.4-bis-trimethylsiloxy-2.4-disila-3-oxaheptan,

2.2-Dimethyl-4.4-bis-trimethylsiloxy-7-chlor-2.4-disila-3-oxaheptan,

2.2-Dimethyl-4.4-bis-trimethylsiloxy-2.4-disila-3-oxaoctadien-(5.7),

2.2-Dimethyl-4.4-bis-trimethylsiloxy-2.4-disila-3-oxaheptin-(6),

2.2.6.6-Tetramethyl-4-phenyl-4-trimethylsiloxy-2.4.6-trisila-3.5-dioxaheptan,
2.2.4.6.6-Pentamethyl-4-phenyl-2.4.6-trisila-3.5-dioxaheptan,
2.2.6.6-Tetramethyl-4.4-diphenyl-2.4.6-trisila-3.5-dioxaheptan,
2.2.4.6.6-Pentamethyl-4-p-Bromphenyl-2.4.6-trisila-3.5-dioxaheptan,
2.2.6.6-Tetramethyl-4-tolyl-4-trimethylsiloxy-2.4.6-trisila-3.5-dioxaheptan,
2.2.6.6-Tetramethyl-4-cyclohexenyl-4-trimethylsiloxy-2.4.6-trisila-3.5-dioxaheptan,
2.2.6.6-Tetramethyl-4-cyclohexadienyl-4-trimethylsiloxy-2.4.6-trisila-3.5-dioxaheptan,
Bis-(tristrimethylsiloxy)silylbenzol-Isomere.

Weitere Beispiele nach dem erfindungsgemäßen Verfahren hergestellter Stoffe sind
2.2.3.3.7.7.8.8-Octamethyl-5-tertiärbutyldimethylsiloxy-3.5.7-trisila-4.6-dioxanonan und
Tertiärbutyldimethylchlorsilan aus 1.2 Ditertiärbutyltetramethyldisiloxan und Trichlorsilan,
2.2.6.6-Tetraphenyl-4.4-dimethyl-2.4.6-trisila-3.5-dioxaheptan und Methyldiphenylchlorsilan aus 1.2-Dimethyl-tetraphenyldisiloxan und Dimethyldichlorsilan,
1.5.5.9-Tetraphenyl-3.3.7.7-tetramethyl-3.5.7-trisala-4.6-dioxanonan und Dimethyl-2-phenyläthylchlorsilan aus 1.2-Di-2-phenyläthyltetramethyldisiloxan und Diphenyldichlorsilan.

Die bei der erfindungsgemäßen Reaktion erzeugten Chlorsilane der allgemeinen Formel $R_3SiCl$ sind wertvolle Zwischenprodukte und Endprodukte, für die bekannte Anwendungen beispielsweise in der Schutzgruppenchemie bestehen. Die nach dem erfindungsgemäßen Verfahren nunmehr in einfacher und wirtschaftlicher Weise herstellbaren zum Teil neuen Organosiloxane der allgemeinen Formel $R''_{4-n}Si(OSiR_3)_n$ besitzen eine umfangreiche Palette von wertvollen Anwendungseigenschaften.

Nach dem erfindungsgemäßen Verfahren herstellbare Organosiloxane mit einem großen Anteil an verzweigten, ungesättigten und aromatischen Organosubstituenten finden mit Vorteil Verwendung als Verbrennungsadditiv in Brenn- und Treibölen in Konzentrationen zwischen 0,05 und 0,8 Gewichtsprozent zur Reinhaltung der Brenn- und Abgasvorrichtungen von durch die Ölverbrennung verursachten Ablagerungen, zur Vervollständigung der Verbrennung und damit der Erhöhung der Energieausbeute, sowie zur Herabsetzung der mit den Verbrennungsvorgangen verbundenen Korrosionsgefahren und Abgasbelastungen.

Weitere beispielhafte Anwendungsgebiete sind die Verwendung solcher gemäß dem erfindungsgemäßen Verfahren hergestellten Verbindungen als Diffusionspumpenöle, wie z. B. das bereits oben aufgeführte 2.2.6.6-Tetraphenyl-4.4-dimethyl-2.4.6-trisila-3.5-dioxaheptan, als Wärmeträgerflüssigkeiten, als Conditioner für hydrophile und hydrophobe Phasenvermittlung.

Nachstehende Beispiele erläutern die Erfindung, jedoch ohne sie zu begrenzen:

**Beispiel 1:**

Herstellung von 2.2.6.6-Tetramethyl-4-trimethylsiloxy-2.4.6-trisila-3.5-dioxaheptan und Trimethylchlorsilan aus Trichlorsilan und Hexamethyldisiloxan in Gegenwart eines $FeCl_3$/HCl-Katalysators.

In einem 6 Liter-Mehrhalskolben mit Rührer, Rückflußkühler, Innenthermometer und einem eintauchenden Kapillarrohr zur HCl-Einleitung wurden 678 g (5 Mol) Trichlorsilan und 2.500 g (15,4 Mol) Hexamethyldisiloxan bei 18° C vermischt. Nach Zugabe von 350 mg wasserfreiem Eisen(III)chlorid unter Rühren wurden 2,5 g HCl eingeleitet. Die Innentemperatur stieg danach durch Selbsterwärmung innerhalb von 40 Minuten auf 48° C und begann nach weiteren 45 Minuten wieder langsam zu fallen.

Nach dem vollständigen Abklingen der Wärmetönung, dies trat nach ca. 4 Stunden Gesamtreaktionszeit ein, wurden durch Destillation 1.590 g Trimethylchlorsilan (Ausbeute 97,7 % bezogen auf Trichlorsilan) und 1.404 g 2.2.6.6-Tetramethyl-4-trimethylsiloxy-2.4.6-trisila-3.5-dioxaheptan (Ausbeute 94,8 % bezogen auf Trichlorsilan) vom $Kp._{10}$ 68° C gewonnen. Im Destillationsrückstand waren außerdem ca. 56 g 1.1.2.2-Tetrakistrimethyl-siloxydisiloxan enthalten.

**Beispiel 2**

Herstellung von 2.2.3.3.7.7.8.8.-Octamethyl-5-tertiärbutyl-dimethylsiloxy-3.5.7-trisila-4.6-dioxanonan und Tertiärbutyldimethylchlorsilan aus Trichlorsilan und 1.2-Ditertiärbutyltetramethyldisiloxan in Gegenwart eines $FeCl_3$/Propanon-(2)HCl-Katalysators:

Analog Beispiel 1 wurden 542 g (4 Mol) Trichlorsilan mit überschüssigen 3450 g (14 Mol) 1.2-Ditertiärbutyltetramethyldisiloxan bei 20° C vermischt. Nach Zugabe von 10 ml einer 4 %-igen Lösung von $FeCl_3$ in Aceton wurden 3 g HCl eingeleitet. Die Innentemperatur stieg danach innerhalb von 10 Minuten auf 33° C und begann nach weiteren 80 Minuten wieder langsam zu fallen. Nach weiteren 60 Minuten zeigte die gaschromatographische Untersuchung, daß die Umsetzungsrate ca. 90 % betrug. Daraufhin wurden dem Reaktionsgemisch 2 ml $PCl_3$ zugemischt und nochmals 3 g HCl eingeleitet. 2 Stunden später war die gesamte Umsetzung beendet. Die destillative Aufarbeitung erbrachte 1728 g Tertiärbutyldimethylchlorsilan (Ausbeute 95,6 % bezogen auf Trichlorsilan) und 1488 g des bisher unbekannten 2.2.3.3.-7.7.8.8-Octamethyl-5-tertiärbutyldimethylsiloxy-3.5.7-trisila-4.6-dioxanonan (Ausbeute 88 % bezogen auf Trichlorsilan) vom Kp.$_1$ 86° C.

Daneben wurden 582 g 1.2-Ditertiärbutyltetramethyldisiloxan zurückgewonnen. Der Destillationsrückstand enthielt ca. 130 g 1.1.2.2-Tetrakistertiärbutyldimethylsiloxydisiloxan.

**Beispiel 3**

Herstellung von 2.2.6-Trimethyl-4.4-bis-trimethylsiloxy-2.4-disila-3-oxaheptan und Trimethylchlorsilan aus Isobutyltrichlorsilan und Hexamethyldisiloxan in Gegenwart eines $FeCl_3$/Acetophenon/HCl-Katalysators:

Analog Beispiel 1 und 2 wurde die Umsetzung von 766 g (4 Mol) Isobutyltrichlorsilan mit überschüssigen 2100 (13 Mol) Hexamethyldisiloxan in Gegenwart von 20 ml einer 2 %-igen Lösung von $FeCl_3$ in Acetophenon bei 19° C mit 2 g HCl gestartet. Nach ca. 1 Stunde hatte sich das Reaktionsgemisch auf 34° C erwärmt. Nach einer weiteren Stunde wurden bei 31° C weitere 2 g HCl eingeleitet. Nach insgesamt 5 Stunden Reaktionszeit zeigte die gaschromatographische Untersuchung eine Umsetzungsrate von ca. 94 % und die Umsetzung wurde mit Hilfe von 2 g $PCl_3$ und weiteren 3 g HCl innerhalb 2 Stunden beendet. Die Destillation lieferte 1274 g Trimethylchlorsilan (97,8 % Ausbeute bezogen auf Isobutyltrichlorsilan) und 1322 g des bisher unbekannten 2.2.6-Trimethyl-4.4-bis-trimethylsiloxy-2.4-disila-3-oxaheptan (93,8 % Ausbeute) vom Kp.$_1$ 96° C.

**Beispiel 4**

Herstellung von 2.2.6.6-Tetramethyl-4-phenyl-4-trimethylsiloxy-2.4.6-trisila-3.5-dioxaheptan und Trimethylchlorsilan aus Phenyltrichlorsilan und Hexamethyldisiloxan in Gegenwart eines $FeCl_3$/4-Methylpentanon-(2)HCl-Katalysators:

Analog Beispiel 1 und 2 wurde die Umsetzung von 846 g (4 Mol) Phenyltrichlorsilan mit 2020 g (12,5 Mol) Hexamethyldisiloxan in Gegenwart von 50 ml einer 1 %-igen Lösung von $FeCl_3$ in 4-Methylpentanon-(2) bei 20° C mit 3 g HCl gestartet. Der Temperaturanstieg erreichte nach 25 Minuten 41° C. Alle 2 Stunden wurden 3 g HCl eingeleitet. Nach 5 Stunden betrug die Umsetzungsrate ca. 90 %, und die Reaktion wurde durch Zusatz von 2 g $PCl_3$ und 3 g HCl innerhalb 3 Stunden zu Ende geführt. Die Destillation lieferte 1289 g Trimethylchlorsilan (99 % Ausbeute) und 1403 g 2.2.6.6-Tetramethyl-4-phenyl-4-trimethylsiloxy-2.4.6-trisila-3.5-dioxaheptan (94,2 % Ausbeute) vom Kp.$_1$ 105° C.

**Beispiel 5**

Persilylierung eines Gemischs, bestehend aus 58 % 3-Chlorpropyl-trichlorsilan, 36 % Propyltrichlorsilan und ca. 6 % 2-Methylpentyltrichlorsilan:

Analog Beispiel 1 und 2 wurden 1 kg des obenstehenden Gemischs mit 2,5 kg Hexamethyldisiloxan in Gegenwart von 50 ml einer 1 %-igen Lösung von $FeCl_3$ in 4-Methylpentanon-(2) und 3 g HCl zur Umsetzung gebracht. Das Reaktionsgemisch erwärmte sich innerhalb 25 Minuten von 19° C auf 37° C. Die Reaktion wurde weitergeführt analog Beispiel 4. Die Destillation über eine SULZER-Kolonne lieferte 1,59 kg Trimethylchlorsilan (97,7 % Ausbeute bezogen auf eingesetztes Si-Chlorid), 514 g (84 %) 2.2-Dimethyl-4.4-bis-trimethylsiloxy-2.4-disila-3-oxaheptan (Kp.$_1$ 70° C) und 967 g (89 %) 2.2-Dimethyl-4.4-bis-trimethyl-siloxy-7-chlor-2.4-disila-3-oxaheptan (Kp.$_1$ 84° C). Eine bei Kp.$_1$ 131° C bis 154° C übergehende Fraktion von 184 g enthielt ca. 100 g 2.2.6-Trimethyl-4.4-bis-trimethylsiloxy-2.4-disila-3-oxadecan. Die genannten Siloxan-Endprodukte sind bisher unbekannte Substanzen.

**Beispiel 6**

Persilylierung eines Gemischs, mit ca. 59 % Si-chlorid-Gehalt, bestehend aus ca. 25 % Phenyltrichlorsilan ca. 50 % Bistrichlorsilylbenzol-Isomeren, ca. 10 % 1-Trichlorsilylbutadien-(1.3), ca. 10 % Vinyltrichlorsilan u.a.:

Analog Beispiel 4 wurden 900 g des obenstehenden Gemischs mit 3,2 kg 20 % Toluol enthaltendem Hexamethyldisiloxan mit 100 ml Katalysatorlösung zur Reaktion gebracht. Die Reaktortemperatur stieg innerhalb von 6 Minuten von 21° C auf 54° C. Nach 4 stündiger Reaktionszeit wurde analog Beispiel 4 mit 1 ml $PCl_3$ weitergearbeitet. Die destillative Aufarbeitung lieferte 1620 g Trimethylchlorsilan in praktisch quantitativer Ausbeute. Das von restlichem Hexamethyldisiloxan, von Toluol und 4-Methylpetanon-(2) befreite Silylierungsprodukt der Ausgangschlorsilane wurde über Aluminiumoxid filtriert. Es enthielt $< 20$ ppm Restchlor-Gehalt. Die Silylierungsprodukte der Bistrichlorsilylbenzol-Isomeren und des 1-Trichlorsilylbutadien (1.3) sind bisher unbekannte Substanzen. Der Praxistest bewies seine besondere Eignung als Verbrennungsadditiv in einer Konzentration von 0,8 % für Brenn- und Treiböle.

**Beispiel 7**

Herstellung des Diffussionspumpenöls 2.2.6.6-Tetraphenyl-4.4-Dimethyl-2.4.6-trisila-3.5-dioxaheptan und Methyldiphenylchlorsilan aus

1.2-Dimethyltetraphenyldisiloxan und Dimethyldichlorsilan:

Analog Beispiel 4 wurden 387 g (3 Mol) Dimethyldichlorsilan und 2476 g (6 Mol) 1.2-Dimethyltetraphenyldisiloxan in Gegenwart von 25 ml einer 8 %-igen Lösung von $FeCl_1$ in Mesityloxid unter Erwärmung auf 75° C umgesetzt unter Zugabe von 3 g HCl alle 2 Stunden (insgesamt wurden dabei 12 g HCl eingesetzt). Nach 8 Stunden betrug die Umsetzungsrate ca. 90 % und die Reaktion wurde durch Zusatz von 2 ml $PCl_3$ und weiteren 3 g HCl innerhalb 3 Stunden beendet. Die Vakuumdestillation über eine Sulzer-Kolonne lieferte 1280 g (98 % Ausbeute) an Methyldiphenylchlorsilan, Kp.$_1$ 128° C, und 1340 g (92 % Ausbeute) an 2.2.6.6-Tetraphenyl-4.4-dimethyl-2.4.6-trisila-3.5-dioxaheptan, Kp.$_{0,2}$ 228° C.

**Beispiel 8**

Herstellung von 2.2.8.8-Tetramethyl-4.4.6.6-tetrakistrimethyl-siloxy-2.4.6.8-tetrasila-3.5.7-trioxanonan und Trimethylchlorsilan:

Analog Beispiel 1 wurden 570 g (2 Mol) Hexachlordisiloxan und 2,84 kg 20 % Toluol enthaltendes Hexamethyldisiloxan in Gegenwart von 20 ml einer 2 %-igen Lösung von $FeCl_3$ in 4-Methyl-pentanon-(2) bei 22° C mit 3 g HCl zur Reaktion gebracht. Der Temperaturanstieg erreichte nach ca. 30 Minuten 30° C und fiel von da an innerhalb 8 Stunden wieder langsam ab. Alle 2 Stunden wurden 3 g HCl eingeleitet. Nach 8 Stunden betrug die Umsetzungsrate ca. 96 % und wurde durch Zusatz von 1 kg $PCl_3$ und weiteren 3 g HCl innerhalb 3 Stunden vervollständigt. Die Destillation lieferte 1300 g (praktisch quantitative Ausbeute) Trimethylchlorsilan. Nach dem Abdampfen restlichen Hexamethyldisiloxans und des Toluols im Rotationsverdampfer wurden 1200 g (ca. 99 % Ausbeute) Silylierungsprodukt erhalten. Die Substanz erweicht bei 234° C und besitzt einen druckabhängigen Ölpunkt bei guten Gleiteigenschaften.

**Beispiel 9**

Persilylierung von Tetrachlorsilan mit Hexamethyldisiloxan:

Analog Beispiel 8 wurde 850 g (5 Mol) Tetrachlorsilan mit 3,4 kg (ca. 21 Mol) Hexamethyldisiloxan zur Reaktion gebracht. Die Temperatur stieg zu Anfang auf 47° C. Durch Destillation wurden 2150 g Trimethylchlorsilan (Ausbeute praktisch quantitativ) und 1800 g (93,5 % Ausbeute) an 2.2.6.6-Tetramethyl-4.4-bis-trimethylsiloxy-2.4.6-trisila-3.5-dioxaheptan, Kp.$_{10}$ 87° C, erhalten. Der Destillationsrückstand von ca. 80 g bestand überwiegend aus 2.2.8.8-Tetramethyl-4.4.6.6-tetrakis-trimethylsiloxy-2.4.6.8-tetrasila-3.5.7-trioxanonan.

**Patentansprüche**

1. Verfahren zur Spaltung von Organodisiloxanen der allgemeinen Formel $(R_3Si)_2O$, in der R für gleiche oder ungleiche, gegebenenfalls durch Ester-, Halogen- oder Arylreste substituierte, gesättigte oder ungesättigte Alkylreste mit 1-18 C-Atomen oder für gegebenenfalls Halogen- oder Alkyl-substituierte Arylreste steht, mit Chlorsilanen der allgemeinen Formel $R'_{4-n}SiCl_n$ ($n = 2, 3$ oder 4), in der R' für H und/oder R, wobei diese Reste auch durch die

Gruppe $-Si\genfrac{}{}{0pt}{}{<R_m}{\,\backslash Cl_{3-m}}$ (m = o oder 1 oder 2) substituiert

sein können, oder für den Rest der Formel $-O-[Si(R_2)O]_p$

$-Si\genfrac{}{}{0pt}{}{<R_m}{\,\backslash Cl_{3-m}}$, in der R die obengenannte Bedeutung hat

und p = o - 4 sein kann, steht unter gleichzeitiger Herstellung von Organochlorsilanen der allgemeinen Formel $R_3SiCl$ und von Organosiloxanen der allgemeinen Formel $R''_{4-n}Si(OSiR_3)_n$, in der R'' gleich R' ist

und/oder die Gruppierung $-O-[Si(R_2)O]_p-$ $Si\genfrac{}{}{0pt}{}{<R_m}{\,\backslash (OSiR_3)_{3-m}}$

bedeutet, dadurch gekennzeichnet, daß man die Reaktion in Gegenwart von $FeCl_3$ und katalytischen Mengen Chlorwasserstoff durchführt.

2. Verfahren gemäß Anspruch 1, dadurch gekennzeichnet, daß das $FeCl_3$ in Oxogruppen enthaltenden, organischen Lösungsmitteln gelöst oder suspendiert eingesetzt wird.

3. Verfahren gemäß Anspruch 1 oder 2, dadurch gekennzeichnet, daß das Ende der Reaktion in Gegenwart einer zusätzlichen katalytischen Menge Phosphortrichlorid durchgeführt wird.

4. Verfahren gemäß einem der Ansprüche 1 bis 3, dadurch gekennzeichnet, daß man die beiden Ausgangskomponenten in einem solchen Verhältnis einsetzt, daß die Siloxanmenge mindestens äquivalent einem der Si-gebundenen Chloratome ist.

5. Verfahren gemäß einem der Ansprüche 2 bis 4, dadurch gekennzeichnet, daß man den $FeCl_3$-Katalysator in Substanz oder als Lösung von 1-15 Gewichtsprozent wasserfreiem Eisen(III)chlorid in Oxogruppen tragenden organischen Verbindungen, vorzugsweise in Ketonen, in einer $FeCl_3$-Konzentration bezogen auf den Gesamtansatz von 0,01 bis 10 Gewichtsprozent einsetzt.

6. Verfahren gemäß einem der Ansprüche 1 bis 5, dadurch gekennzeichnet, daß man die Reaktion nach Vormischen der beiden Ausgangskomponenten und des Katalysators durch Einleiten einer katalytischen Menge Chlorwasserstoff, vorzugsweise 0,05 - 1 Gewichtsprozent HCl bezogen auf den Gesamtansatz, startet.

7. Verfahren gemäß Anspruch 3, dadurch gekennzeichnet, daß das Phosphortrichlorid in Mengen zwischen 0,02 und 0,5 Gewichtsprozent, bezogen auf den Gesamtansatz eingesetzt wird.

8. Katalysatorsystem, enthaltend in flüssigen Ketonen gelöstes Eisen(III)chlorid und Chlorwasserstoff.

9. Verwendung der Verbindungen der allgemeinen Formel $R''_{4-n}Si(OSiR_3)n$ als Verbrennungsadditiv für Brenn- und/oder Treiböle.

**Claims**

1. A method for the cleaving of organodisiloxanes having the general formula $(R_3Si)_2O$, where R stands for the same or different saturated or unsaturated alkyl residues with 1 to 18 C-atoms optionally substituted by ester, halogen or aryl residues or for aryl residues optionally substituted by halogen or alkyl residues, with chlorsilanes having the general formula $R'_{4-n}SiCl_n$ (n = 2, 3 or 4), where R' stands for H and/or R, with it also being possible to substitute said residues by the group

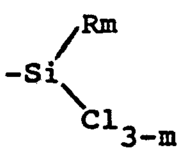

(m = 0 or 1 or 2) or for the residue of the formula

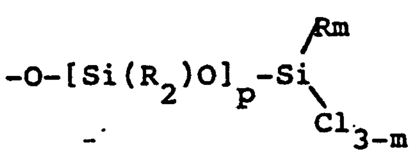

,

where R can have the above-mentioned meaning and p = 0 to 4, with the simultaneous production of organochlorsilanes having the general formula $R_3SiCl$ and organosiloxanes having the general formula $R''_{4-n}Si(OSiR_3)n$ where R'' = R' and/or denotes the grouping

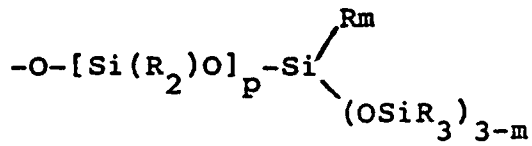

,

characterised in that the reaction is carried out in the presence of $FeCl_3$ and catalytic quantities of hydrochloric acid.

2. A method according to claim 1, characterised in that the $FeCl_3$ is used dissolved or suspended in organic solvents containing oxo groups.

3. A method according to claim 1 or 2, characterized in that the end of the reaction is carried out in the presence of an additional catalytic quantity of phosphorus trichloride.

4. A method according to any one of claims 1 to 3, characterised in that the two starting components are used in such a ratio that the quantity of siloxane is at least equivalent to one of the Si-bonded chlorine atoms.

5. A method according to any one of claims 2 to 4, characterised in that the $FeCl_3$ catalyst is used as such or as a solution of 1 - 15 % by weight anhydrous iron (III) chloride in organic compounds containing oxo groups, preferably in ketones, in a $FeCl_3$ concentration of 0.01 to 10 % by weight relative to the overall formulation.

6. A method according to any one of claims 1 to 5, characterized in that after the preliminary mixing of the two starting components and the catalyst, the reaction is started by the introduction of a catalytic quantity of hydrogen chloride, preferably 0.05 - 1 % by weight HCl relative to the overall formulation.

7. A method according to claim 3, characterised in that the phosphorus trichloride is used in quantities of between 0.02 and 0.5 % by weight in relation to the overall formulation.

8. A catalyst system containing iron (III) chloride dissolved in liquid ketones and hydrogen chloride.

9. The use of compounds having the general formula $R''_{4-n}Si(OSiR_3)_n$ as a combustion additive for combustion and/or fuel oils.

**Revendications**

1. Procédé pour la scission d'organodisiloxanes de formule générale $(R_3Si)_2O$ dans laquelle R représente des restes alkyles avec 1 à 18 atomes de C identiques ou différents, saturés ou insaturés, éventuellement substitués par des restes esters, halogènes ou aryles ou des restes aryles, éventuellement substitués par des halogènes ou des alkyles, avec des chlorosilanes de formule générale $R'_{4-n}SiCl_n$ (n = 2, 3 ou 4), dans laquelle R' représente H et/ou R, ces restes pouvant également être substitués par le groupe

$-Si{<}^{Rm}_{Cl_{3-m}}$ (m = 0 ou 1 ou 2) ou représente le reste de formule

$-O-[Si(R_2)O]_p-Si{<}^{Rm}_{Cl_{3-m}}$ dans laquelle R a la signification précédente

et p peut être 0 à 4, avec obtention simultanée d'oganochlorosilanes de formule générale $R_3SiCl$ et d'organosiloxanes de formule générale $R''_{4-n}Si(OSiR_3)_n$ dans laquelle R'' est égal à R' et/ou représente le groupement $-O[Si(R_2)O]_p$

$-Si{<}^{Rm}_{(OSiR_3)_{3-m}}$, caractérisé en ce qu'on effectue la réaction en présence de $FeCl_3$ et de quantités catalytiques de gaz chlorhydroque.

2. Procédé selon la revendication 1, caractérisé en ce que le $FeCl_3$ est mis en oeuvre en solution ou en suspension dans des solvants organiques contenant des groupes oxo.

3. Procédé selon la revendication 1 ou 2, caractérisé en ce que la fin de la réaction s'effectue en présence d'une quantité catalytique supplémentaire de trichlorure de phosphore.

4. Procédé selon l'une des revendications 1 à 3, caractérisé en ce qu'on met en oeuvre les deux constituants de départ dans un rapport tel que la quantité de siloxane soit au moins équivalente à l'un des atomes de chlore liés à Si.

5. Procédé selon l'une des revendications 2 à 4, caractérisé en ce qu'on met en oeuvre le catalyseur à base de $FeCl_3$ en masse ou sous forme de solution à 1 - 15 pourcent en poids de chlorure de fer (III) anhydre dans des composés organiques porteurs de groupes oxo, de préférence dans des cétones, à une concentration en $FeCl_3$, rapportée au mélange total, de 0,01 à 10 pourcent en poids.

6. Procédé selon l'une des revendications 1 à 5, caractérisé en ce qu'on amorce la réaction après prémélange des deux constituants de départ et du catalyseur par introduction d'une quantité catalytique de gaz chlorhydrique, de préférence de 0,05 à 1 pourcent en poids d'HCl par rapport au mélange total.

7. Procédé selon la revendication 3, caractérisé en ce que le trichlorure de phosphore est mis en oeuvre en des quantités comprises entre 0,02 et 0,5 pourcent en poids par rapport au mélange total.

8. Système de catalyseur contenant du chlorure de fer (III) dissous dans des cétones liquides et du gaz chlorhydrique.

9. Utilisation des composés de formule générale $R''_{4-n}Si(OsiR_3)_n$ en tant qu'additif de combustion pour huiles de chauffage et/ou huiles lourdes pour moteurs.